# EUROPEAN PATENT APPLICATION

(11) **EP 4 435 234 A1**
(43) Date of publication of application: **25.09.2024**
(21) Application number: 24164866.6
(22) Date of filing: 20.03.2024
(51) Int. Cl.: F01D 11/00, F01D 11/02

(54) **STATOR LABYRINTH SEAL**

(30) Priority: 21.03.2023 US 202318187557
(71) Applicant: RTX Corporation, Farmington, CT 06032 (US)
(72) Inventor: YOCHIMOWITZ, Jacob, East Haddam (US); SHAHAB, Farruqh, East Hartford (US); KLINE, Bradley Paul, Middletown (US)
(74) Representative: Dehns

(57) **Abstract**

A stator vane assembly (300; 350) is disclosed herein. The stator vane assembly (300; 350) includes a stator box (302) having a top side and a bottom side, a vane coupled to the top side of the stator box (302), and an integral seal (306; 356) coupled to the bottom side of the stator box (302), the integral seal (356) extending away from the stator box (302) and forming a tortuous path to prevent airflow below the stator box (302).

## Description

### TEHCNICAL FIELD

The present disclosure relates to a gas turbine engine and, more specifically, to a stator vane assembly.

### BACKGROUND

Gas turbine engines (such as those used in electrical power generation or used in modern aircraft) typically include a fan section, a compressor section, a combustor section and a turbine section. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. One or more sections of the gas turbine engine may include a series of alternating rotor assemblies and stator assemblies. Stator assemblies may include plurality of stator vane assemblies having stator vanes interspersed between the rotor assemblies. Typically, air seals are secondarily bonded to each of the plurality of stator vanes to limit secondary air flow through the compressor. Secondary airflow is air flow, or leakage, in opposite direction of the primary path of intake air through successive rotor/stator stages. Generally, secondary air flow occurs through cavities located inboard or outboard of the compressor flowpath end walls

### SUMMARY

In accordance with an aspect of the present invention, there is provided a stator vane assembly is disclosed herein. The stator vane assembly includes a stator box having a top side and a bottom side, a vane coupled to the top side of the stator box, and an integral seal coupled to the bottom side of the stator box, the integral seal extending away from the stator box and forming a tortuous path to prevent airflow below the stator box.

In various embodiments, the integral seal further includes a plurality of extended portions, and a plurality of recessed portions interleaved with the plurality of extended portions. In various embodiments, the stator vane assembly is configured to move forward and aft a first distance and wherein each of the plurality of recessed portions has a width that is greater than the first distance. In various embodiments, the stator box and the integral seal are a single, monolithic component.

In various embodiments, the stator box and the integral seal are formed from the same material. In various embodiments, the integral seal further includes a first portion that extends away from the stator box a first height, and a second portion that extends away from the stator box a second height, the second height being less than the first height. In various embodiments, the first portion includes a first edge and a second edge, the second edge being adjacent the second portion, wherein the first edge has a non-vertical slope. In various embodiments, the first portion includes a first edge and the second portion includes a second edge, wherein the first edge and the second are vertical. In various embodiments, the integral seal is formed of a plurality of plies.

In accordance with an aspect of the present invention, there is provided a gas turbine engine including a rotor assembly and a plate seal, and a vane assembly including a stator vane assembly. The stator vane assembly includes a stator box having a top side and a bottom side, a vane coupled to the top side of the stator box, and an integral seal coupled to the bottom side of the stator box, the integral seal extending away from the stator box toward the rotor assembly, the integral seal and the plate seal combining to form a tortuous path to reduce airflow between the rotor assembly and the vane assembly.

In various embodiments, the integral seal further includes a plurality of extended portions, and a plurality of recessed portions interleaved with the plurality of extended portions, a recessed portion of the plurality of recessed portions disposed over the plate seal. In various embodiments, the vane assembly is configured to move forward and aft a first distance with respect to the rotor assembly, and wherein each of the plurality of recessed portions has a width that is greater than the first distance. In various embodiments, the stator vane assembly is a single monolithic component.

In various embodiments, the integral seal includes a first edge and a second edge, the first edge and the second edge being vertical. In various embodiments, the integral seal includes a first edge and a second edge, the first edge and the second edge being non-vertical. In various embodiments, the stator vane assembly is formed from a plurality of plies that are formed on top of each other.

In accordance with an aspect of the present invention, there is provided a method of manufacturing a stator vane assembly. The method includes receiving a design for the stator vane assembly, the stator vane assembly including a vane, a stator box, and an integral seal, forming the stator box of the stator vane assembly, and forming the integral seal of the stator vane assembly, the integral seal being coupled to the stator box.

In various embodiments, the design includes one of a mold or a preform. In various embodiments, the design includes a computer file including instructions for forming the stator box and the integral seal as a single monolithic component using at least one of an additive manufacturing or an automated tape laying process. In various embodiments, the computer file is a computer program comprising the instructions. The program may be executed by a computer. In various embodiments, a computer-readable data carrier may have stored thereon the computer program. In various embodiments, the forming the stator box and the forming the integral seal includes forming a series of plies that define the stator box and the integral seal.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a cross-sectional view of a gas-turbine engine, in accordance with various embodiments.
FIG. 1B illustrates a cross-sectional view of a compressor, in accordance with various embodiments.
FIG. 2 illustrates a fragmentary perspective view of a stator vane assembly of a gas turbine engine, in accordance with various embodiments.
FIGS. 3A and 3B illustrate a stator vane assembly including an integral seal, in accordance with various embodiments.
FIG. 4 illustrates a method of manufacture of a stator vane assembly including an integral seal, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion.

Disclosed herein is a stator vane assembly including an integral seal for use in a gas turbine engine. In various embodiments, the stator vane assembly may be used in a compressor of the gas turbine engine, the compressor including stator vane assemblies and a rotor assembly. In various embodiments, the integral seal is formed to a bottom portion of a stator box that is part of the stator vane assembly. In various embodiments, the integral seal includes a plurality of extended portions interleaved with a plurality of recessed portions. In various embodiments, the recessed portions are located over plate seals, or a knife edge, that are coupled to a rotor assembly. The integral seal is configured to not contact the plate seals as they rotate with the rotor assembly. In various embodiments, the extended portions extend below a top surface of the plate seals. In various embodiments, the width of the recessed portions is sufficient to allow the stator vane assembly to move forward and aft, with respect to the rotor assembly, without contacting the plate seals. The integral seal and the plate seals may form a labyrinth seal that creates a tortuous path for air to pass through and therefore creates a seal to block air from passing through. A tortuous path may be a circuitous, convoluted, indirect, or labyrinthine path that is twisting, winding, and/or curving. A tortuous path may further be considered a meandering or serpentine path. In other words, a tortuous path is a non-linear path including one or more obstacles to impede air flow along the path. In various embodiments, the integral seal is molded as part of the stator box during manufacture of the stator vane assembly. In various embodiments, the integral seal and the stator box may be formed as a single, monolithic unit using hand layup, additive manufacturing, automated tape laying, chopped fiber, and/or preform techniques, among others, to facilitate manufacturing. In various embodiments, the stator vane assembly including the integral seal may improve the efficiency of the gas turbine engine. In various embodiments, the stator vane assembly including the integral seal may reduce and/or eliminate the manufacturing, bonding, and/or inspections associated with typical seal designs.

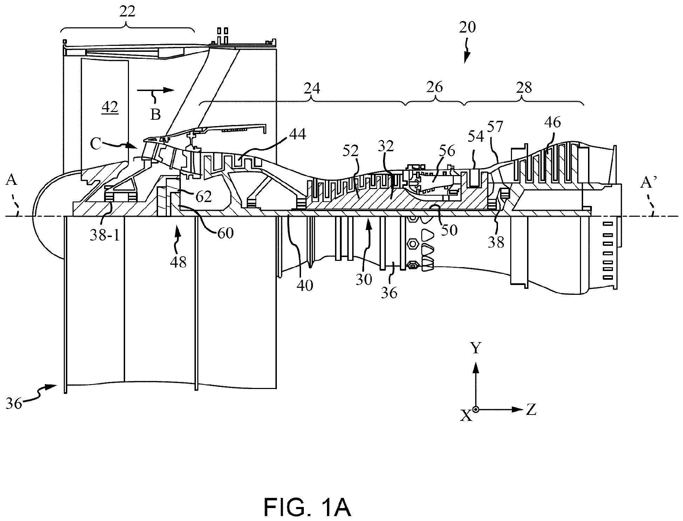

Referring now to FIG. 1A, a gas turbine engine 20 is illustrated, in accordance with various embodiments. Gas turbine engine 20 may be a two-spool turbofan that generally incorporates a fan section 22, a compressor section 24, a combustor section 26, and a turbine section 28.

In operation, fan section 22 can drive air along a path of bypass airflow B while compressor section 24 can drive air along a core flow path C for compression and communication into combustor section 26 then expansion through turbine section 28. Although depicted as a turbofan gas turbine engine herein, it should be understood that the concepts described herein are not limited to use with turbofans as the teachings may be applied to other types of turbine engines including three-spool architectures, single spool architecture, or the like.

Gas turbine engine 20 may generally include a low speed spool 30 and a high speed spool 32 mounted for rotation about an engine central longitudinal axis A-A' (e.g., parallel to the z-axis) relative to an engine static structure 36 or engine case via several bearing systems 38, 38-1, etc. It should be understood that various bearing systems 38 at various locations may alternatively or additionally be provided, including for example, bearing system 38, bearing system 38-1, etc.

Low speed spool 30 may generally include an inner shaft 40 that interconnects a fan 42, a low pressure compressor 44, and a low pressure turbine 46. Inner shaft 40 may be connected to fan 42 through a geared architecture 48 that can drive fan 42 at a lower speed than low speed spool 30. Geared architecture 48 may include a gear assembly 60 enclosed within a gear housing 62. Gear assembly 60 couples inner shaft 40 to a rotating fan structure. High speed spool 32 may include an outer shaft 50 that interconnects a high pressure compressor 52 and high pressure turbine 54. A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

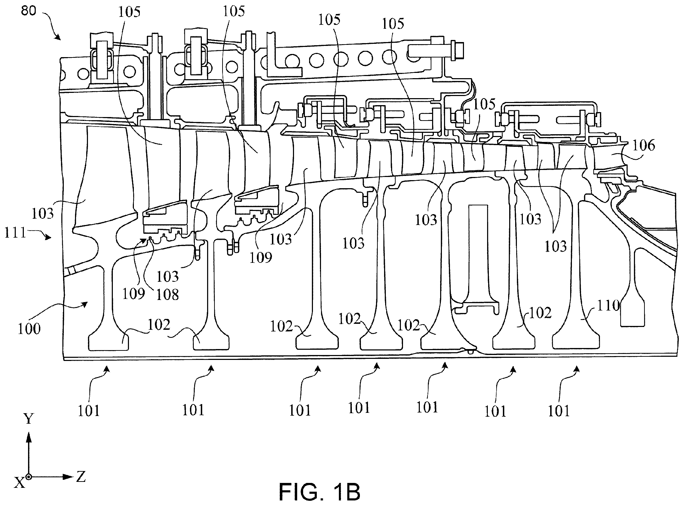

Referring now to FIG. 1B, a cross section of a compressor 80 of the compressor section 24 of gas turbine engine 20 is illustrated, in accordance with various embodiments. In various embodiments, compressor 80 may be an example of low pressure compressor 44. In various embodiments, compressor 80 may be an example of high pressure compressor 52.

Compressor 80 includes a plurality of blade stages 101 (i.e., rotor stages) and a plurality of vane stages 105 (i.e., stator stages). Blade stages 101 may each include an integrally bladed rotor ("IBR") 100, such that the blades 103 and rotor disks 102 are formed from a single integral component (i.e., a monolithic component formed of a single piece). Blades 103 extend radially outward from rotor disks 102. Gas turbine engine 20 may further include an exit guide vane stage 106 that defines the aft end of compressor 80. Although illustrated with respect to compressor 80, the present disclosure is not limited in this regard. For example, low pressure compressor 44 may include a plurality of blade stages 101 and stator stages 105, each blade stage in the plurality of blade stages 101 may include IBR 100 and still be within the scope of this disclosure. In various embodiments, the plurality of blade stages 101 form a stack of IBRs 110, which define, at least partially, a rotor module 111 of compressor 80 of gas turbine engine 20.

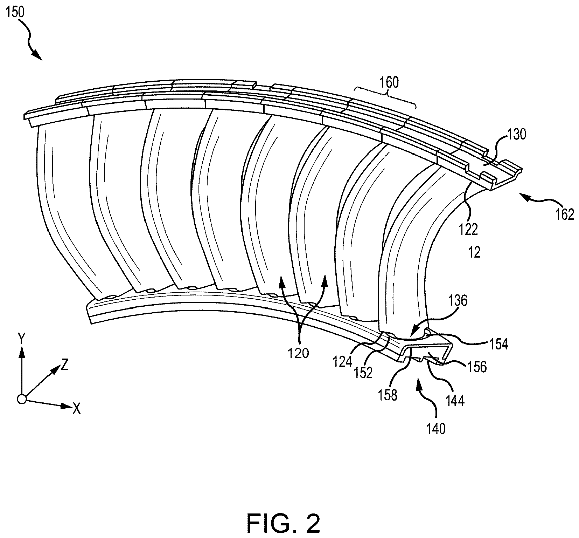

IBR 100 further includes a knife edge 108 of a knife edge seal assembly 109. Knife edge 108 is disposed between adjacent rotor stages in the plurality of blade stages 101 and configured to interface with a vane assembly in the plurality of vane stages 105. Each vane assembly in the plurality of vane stages 105 may include a partial or a complete circumferential array of vanes In various embodiments, knife edge seal assembly 109 is configured to seal air flow from core flow path C during operation of the gas turbine engine 20 (as illustrated in FIG. 1A). In various embodiments, knife edge seal assembly 109 may be a labyrinth style seal assembly that is defined by vane stages 105 at one end and knife edge 108 at the other end. Knife edge seal assembly 109 may be a non-contact, tortuous path for airflow that effectively operates as a seal that reduces and/or prevents airflow between vane stages 105 and IBR 100. Referring now to FIG. 2, a vane subassembly 150 of a vane assembly in the plurality of vane stages 105 is illustrated, in accordance with various embodiments. The vane assembly, including vane subassembly 150, may include a partial or a complete circumferential array of vanes 120. In various embodiments, the vane assembly may include a continuous annular vane assembly or a plurality of vane clusters or vane subassemblies 150. Vanes 120 may be grouped into vane subassemblies 150 and arranged circumferentially about engine central longitudinal axis A-A' (see FIG. 1A) to form the vane assembly. Vane subassemblies 150 may be mounted in circumferentially abutting relationship to form an annular ring.

Vane subassembly 150 may include a plurality of vanes 120 and a segment of inner shroud 140. Inner shroud 140 defines a plurality of apertures 152 configured to receive vanes 120. A radial flange 136 at a radially inner end 124 of vane 120 is configured to fit into an aperture 152 of inner shroud 140. A radial flange 136 of each vane 120 is received in a corresponding aperture 152 of the inner shroud 140.

In various embodiments, inner shroud 140 may be comprised of the same material or a similar material as vanes 120. Inner shroud 140 may be comprised of a composite material such as a fiber composite material and/or a fiber composite material infiltrated or impregnated with a resin, such as epoxy or other thermoset or a thermoplastic. The composite material of inner shroud 140 may comprise at least one of carbon fiber, glass fiber, aramid fiber, para-aramid fiber or a combination thereof impregnated with a resin. The composite material of inner shroud 140 may comprise a high temperature polymer such as an amorphous thermoplastic PEI, such as ULTEM^{®}, which is a trademark of SABIC Innovative Plastics, Inc. For example, inner shroud 140 may be formed from a non-metallic carbon fiber reinforced epoxy resin. In various embodiments, inner shroud 140 may be made from moldable materials, such as carbon and/or glass reinforced thermoset or thermoplastic. The material may be compression molded using an autoclave or injection molded by injecting material into a mold. The materials may be low cost, low weight materials shaped using low cost techniques. Accordingly, inner shroud 140 may reduce the weight and cost of a gas turbine engine.

In various embodiments, inner shroud 140 may be comprised of a metal, such as titanium, titanium-based alloy, aluminum, aluminum-based alloy or other alloy or suitable metal or alloy. The material of inner shroud 140 may be resistant to heat. In various embodiments, the properties of materials use to form vanes 120 are compatible with the temperatures and pressures encountered during operation of IBR 100 (of FIG. 1B). In various embodiments, inner shroud 140 including a carbon fiber reinforced epoxy resin may be resistant to temperatures experienced in the IBR 100.

In various embodiments, vanes 120 may be attached to inner shroud 140 by a flexible material 154 disposed in aperture 152 between vane 120 and inner shroud 140. In various embodiments, flexible material 154 can be a rubber potting material, such as natural rubber, synthetic rubber, silicone, or another elastomeric material. Flexible material 154 may be room temperature vulcanized (RTV) silicone or rubber or other thermoset material. Flexible material 154 can be applied within aperture 152 as a liquid and then allowed to cure or solidify. Flexible material 154 can hold vane 120 in a fixed position with respect to inner shroud 140 so as to be spaced from and avoid contact with inner shroud 140. Flexible material 154 adheres to and bonds vanes 120 to inner shroud 140 to provide a flexible connection between these components. Flexible material 154 supports and vibrationally isolates radial flange 136 of vane 120 relative to inner shroud 140.

An integral seal 156 may be formed on or integral (i.e., monolithic) to an inner diameter surface 158 of inner shroud 140 opposite to vanes 120. In various embodiments, integral seal 156 may be formed from the same material as vanes 120. Integral seal 156 may form the radially inner surface 144 of inner shroud 140 and may form a non-contact, tortuous path air seal.

Vanes 120 may be mounted in a circumferentially abutting relationship to form vane subassembly 150, which may be portion of an annular vane assembly. In various embodiments, each vane 120 may be a separate component from each adjacent vane 120. Each blade 103 may further include an outer shroud segment 160 disposed at radially outer end 122 of each vane 120. Each vane 120 includes a platform 130, which may be coupled to the vane 120 or integrally formed with the vane 120. A radially outer end 122 of each vane 120 with platform 130 may form an outer shroud segment 160. A plurality of outer shroud segments 160 may form outer diameter shroud 162 of a vane subassembly 150 or vane assembly 104. Thus, each vane 120 may include a discrete outer shroud segment 160 integral with the vane 120. As used herein, the term "integrated" or "integral" may include forming one, single, monolithic, continuous piece. In various embodiments, outer shroud segment 160 may be formed integrally with vane 120 as one continuous composite material by injection molding.

In various embodiments, outer shroud segment 160 may be comprised of the same material or a similar material as vanes 120. Outer shroud segment 160 may be comprised of a composite material such as a fiber composite material and/or a fiber composite material infiltrated or impregnated with a resin, such as epoxy or other thermoset or a thermoplastic. The composite material of outer shroud segment 160 may comprise at least one of carbon fiber, glass fiber, aramid fiber, para-aramid fiber or a combination thereof impregnated with a resin. The composite material of outer shroud segment 160 may comprise a high temperature polymer such as an amorphous thermoplastic PEI, such as ULTEM^{®}, which is a trademark of SABIC Innovative Plastics, Inc. For example, outer shroud segment 160 may be formed from a non-metallic carbon fiber reinforced epoxy resin. In various embodiments, outer shroud segment 160 may be made from moldable materials, such as carbon and/or glass reinforced thermoset or thermoplastic. The material may be compression molded using an autoclave or injection molded by injecting material into a mold. The materials may be low cost, low weight materials shaped using low cost techniques. Accordingly, outer shroud segment 160 may reduce the weight and cost of a gas turbine engine. The composite material of outer shroud segment 160 may be resistant to heat. In various embodiments, the properties of materials use to form vanes 120 are compatible with the temperatures and pressures encountered during operation of IBR 100 (of FIG. 1B).

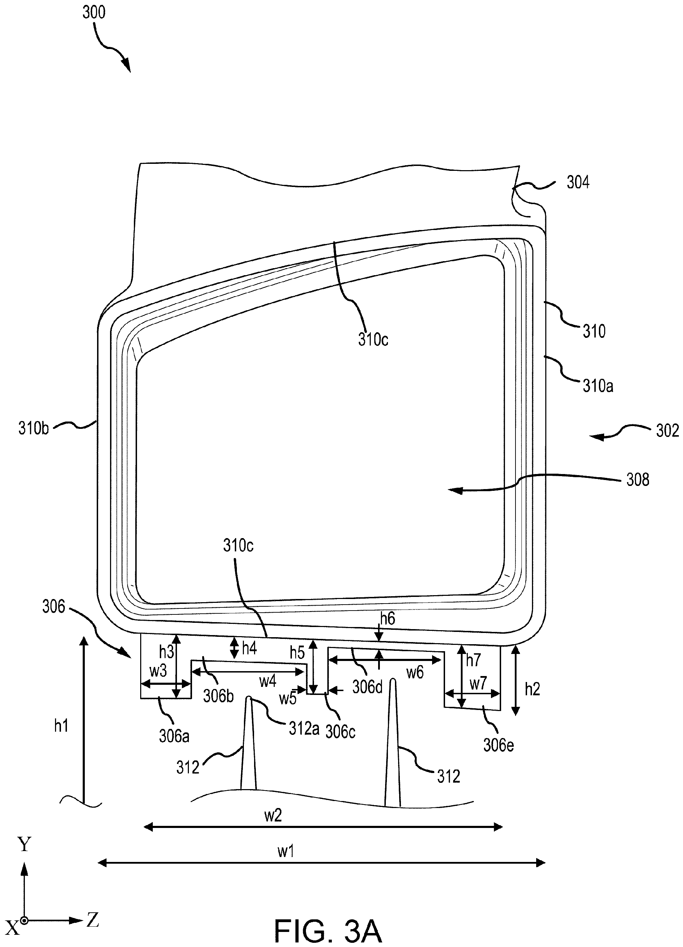

Referring now to FIG. 3A, a stator vane assembly 300 (e.g., from vane subassembly 150) is illustrated, in accordance with various embodiments. In various embodiments, stator vane assembly 300 may be an example of vane 120 described above with respect to FIG. 2. Stator vane assembly 300 a stator box 302, a vane 304, and an integral seal 306. Stator box 302 includes an opening 308 defined by an outer diameter 310. Outer diameter 310 includes a first side 310a, a second side 310b, a bottom 310c, and a top 310d. Vane 304 is coupled to top 310d of stator box 302. In various embodiments, vane 304 and stator box 302 form a single monolithic component. In various embodiments, stator vane assembly 300 may be configured to move forward (e.g., in the negative z-direction) and aft (e.g., in the positive z-direction) with respect to a rotor (e.g., rotor module 111). Stator box 302 has a width w1 (e.g., parallel to the z-axis) from first side 310a to second side 310b. Stator box 302, and more specifically bottom 310c of stator box 302, is a height h1 (e.g., parallel to the y-axis) away from the rotor assembly (e.g., IBR 100). Width w1 and height h1 vary based on individual embodiments and implementations and are used below as a reference width and height, respectively.

Integral seal 306 is coupled to bottom 310c of stator box 302. In various embodiments, integral seal 306 and stator box 302 form a single, monolithic component. In various embodiments, integral seal 306, stator box 302, and vane 304 form a single monolithic component. Integral seal 306 extends away from stator box 302 and toward the rotor module (e.g., in the negative y-direction). Integral seal 306 has a width w2 (e.g., parallel to the z-axis) and a height h2 (e.g., parallel to the y-axis). Width w2 is about 50% to about 90% of width w1, and more specifically, about 60% to about 75% of width w1. Height h2 is about 20% to about 90% of height h1, and more specifically about 30% to about 70% of height h1. In various embodiments, integral seal 306 includes a plurality of extended portions interleaved with a plurality of recessed portions. In various embodiments, integral seal 306, including the plurality of extended and recess portions is configured as a labyrinth style seal with integral seal 306 being a first half of the labyrinth style seal and one or more plate seals 312 being a second half of the labyrinth seal. In various embodiments, the one or more plate seals 312 may be an example of knife edge 108 described above with respect to FIG. 1B. The one or more plate seals 312 include a top portion 312a that extends upward from the rotor assembly (e.g., in the positive y-direction) and between two or more of the plurality of extended portions, as will be described in further detail below. In the illustrated embodiments, integral seal 306 includes a first extended portion 306a, a first recessed portion 306b, a second extended portion 306c, a second recessed portion 306d, and a third extended portion 306e. Each of the plurality of extended portions 306a, 306c, 306e and each of the plurality of recessed portions 306b, 306d have an associated width (e.g., parallel to the z-axis) and height (e.g., parallel to the y-axis).

In the illustrated embodiment, each portion 306a-306e of integral seal 306 is illustrated as having vertical edges (e.g., parallel to the y-axis). In various embodiments, one or more portion 306a-306e of integral seal 306 may include one or more edges that are sloped (e.g., not parallel to the y-axis). In various embodiments, a bottom surface of each portion 306a-306e may be horizontal (e.g., parallel to the z-axis). In various embodiments, the bottom surface of each portion 306a-306e may be non-horizontal (e.g., not parallel to the z-axis). First extended portion 306a has a width w3 (e.g., parallel to the z-axis) from a left side (e.g., the negative z-direction) of integral seal 306 to first recessed portion 306b. In various embodiments, width w3 may be determined based on various design parameters including width w1 of stator box 302, height h1 between the rotor assembly and stator box 302, and/or desired airflow obstruction, among others. First extended portion 306a has a height h3 (e.g., parallel to the y-axis) that is about 20% to about 90% of height h1, and more specifically about 30% to about 70% of height h1. In various embodiments, first extended portion 306a may extend below top portion 312a of plate seal 312.

First recessed portion 306b has a width w4 (e.g., parallel to the z-axis) from first extended portion 306a to second extended portion 306c. In various embodiments, width w4 may be designed to account for movement of stator vane assembly 300 (e.g., along the z-axis). That is, width w4 may be about 105% to about 115% of a range of motion of stator vane assembly 300, and more specifically, about 100% of the range of motion of stator vane assembly 300. First recessed portion 306b has a height h4 (e.g., parallel to the y-axis) that is less than height h1. First recessed portion 306b is disposed over a first plate seal 312 and height h4 is designed such that first recessed portion 306b does not extend to top portion 312a of the first plate seal 312.

Second extended portion 306c has a width w5 (e.g., parallel to the z-axis) from first recessed portion 306b to second recessed portion 306d. and a height h5 (e.g., parallel to the y-axis). In various embodiments, width w5 may be determined based on various design parameters including width w1 of stator box 302, height h1 between the rotor assembly and stator box 302, and/or desired airflow obstruction, among others. Second extended portion 306c has a height h5 (e.g., parallel to the y-axis) that is about 20% to about 90% of height h1, and more specifically about 30% to about 70% of height h1. In various embodiments, first extended portion 306a may extend below top portion 312a of plate seal 312.

Second recessed portion 306d has a width w6 (e.g., parallel to the z-axis) from second extended portion 306c to third extended portion 306e. In various embodiments, width w6 may be designed to account for movement of stator vane assembly 300 (e.g., along the z-axis). That is, width w6 may be about 105% to about 115% of a range of motion of stator vane assembly 300, and more specifically, about 100% of the range of motion of stator vane assembly 300. Second recessed portion 306d has a height h6 (e.g., parallel to the y-axis) that is less than height h1. Second recessed portion 306d is disposed over a second plate seal 312 and height h6 is designed such that second recessed portion 306d does not extend to top portion 312a of the second plate seal 312.

Third extended portion 306e has a width w7 (e.g., parallel to the z-axis) from second recessed portion 306d to a right side of integral seal 306 (e.g., in the positive z-direction). In various embodiments, width w7 may be determined based on various design parameters including width w1 of stator box 302, height h1 between the rotor assembly and stator box 302, and/or desired airflow obstruction, among others. Third extended portion 306e has a height h7 (e.g., parallel to the y-axis) that is about 20% to about 90% of height h1, and more specifically about 30% to about 70% of height h1. In various embodiments, first extended portion 306a may extend below top portion 312a of plate seal 312.

Integral seal 306, as described above, is configured to provide a non-contact, tortuous path for air flow between stator box 302 and the rotor assembly. Integral seal 306 and plate seals 312 reduce and/or eliminate secondary airflow between bottom 310c of stator box 302 and the rotor assembly. In various embodiments, integral seal 306 is formed as a part of stator box 302. In various embodiments, this configuration increases the maximum temperature capability of stator vane assembly 300. In various embodiments, this configuration reduces risks that are present when an abradable material is bonded to stator box 302, as is typically done to form a seal between stator vane assembly 300 and the rotor assembly.

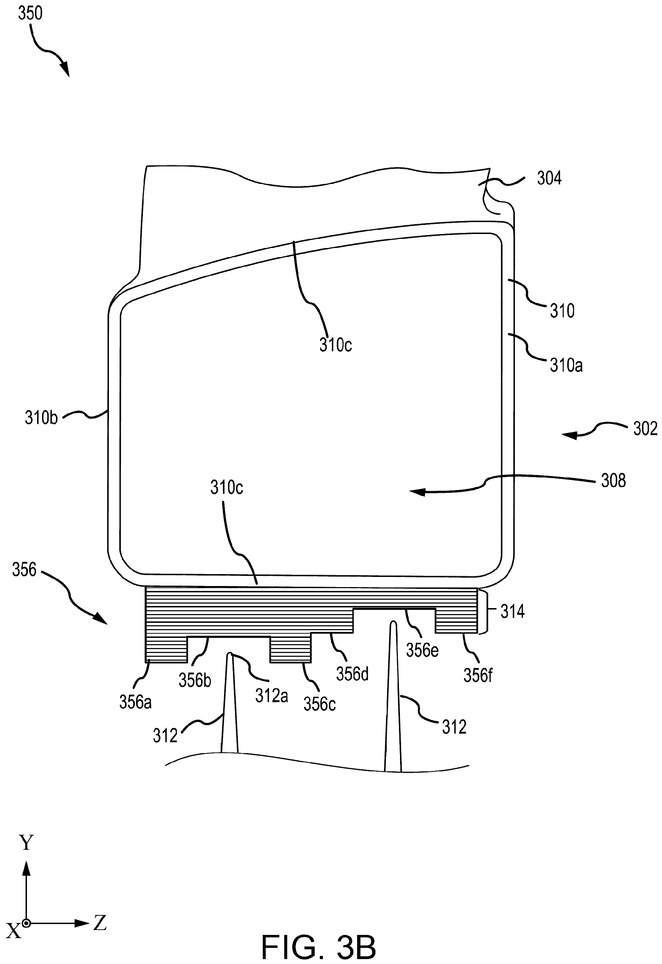

In various embodiments, stator vane assembly 300, and more specifically, integral seal 306 may be more durable than typical seals that are bonded to stator box 302. In various embodiments, integral seal 306 may improve the efficiency of the engage (e.g., gas turbine engine 20) by enabling an expanded design space, due to the higher durability and temperature capability. In various embodiments, integral seal 306 may allow for improved seal geometries. In various embodiments, integral seal 306 may decrease costs associated with production of stator vane assembly 300 by reducing and/or eliminating the manufacturing, bonding, and/or inspections associated with the typical bonded seals designs. Referring now to FIG. 3B, a stator vane assembly 350 (e.g., from vane subassembly 150) is illustrated, in accordance with various embodiments. In various embodiments, stator vane assembly 350 may be an example of vane 120 described above with respect to FIG. 2. Stator vane assembly 350 includes similar components to those described above with respect to stator vane assembly 300 in FIG. 3A, including stator box 302, vane 304, opening 308, and outer diameter 310 including first side 310a, second side 31 0b, bottom 310c, and top 310d. Description of similar components may not be repeated below. Stator vane assembly 350 further includes an integral seal 356 coupled to bottom 310c of stator box 302. Integral seal 356 includes a first extended portion 356a, a first recessed portion 356b, a second extended portion 356c, a third recessed portion 356d, a fourth recessed portion 356e, and a third extended portion 356f. In various embodiments, integral seal 356 be formed of a plurality of plies 314 (also referred to as layers). In various embodiments, each ply of the plurality of plies 314 may be about 6 mils to about 10 mils thick, and more specifically, about 7.5 mils to about 8 mils thick.

In the illustrated embodiments, plate seals 312, including top portions 312a, extend upward (e.g., in the positive y-direction) from the rotor assembly. Integral seal 356 is designed so that top portions 312a of plate seals 312 are between first extended portion 356a and second extended portion 356c and between third recessed portion 356d and third extended portion 356f.

Similar to integral seal 306 described above with respect to FIG. 3A, the plurality of portions 356a-356f have various widths and heights such that the recessed portions 356b, 356e are disposed over plate seals 312 and do not contact top portion 312a of plate seals 312. Additionally, the widths of recessed portions 356b, 356e are sufficient to allow stator vane assembly 350 to move forward (e.g., in the negative z-direction) and aft (e.g., in the positive z-direction) without integral seal 356 contacting plate seals 312.

In various embodiments, plies 314 may be formed along bottom 310c of stator box during manufacture of stator box 302. In various embodiments, plies 314 may wrap around outer diameter 310 of stator box 302. In various embodiments, plies 314 may be formed during an additive manufacturing process, a hand layup process, or an automated tape laying process, among others.

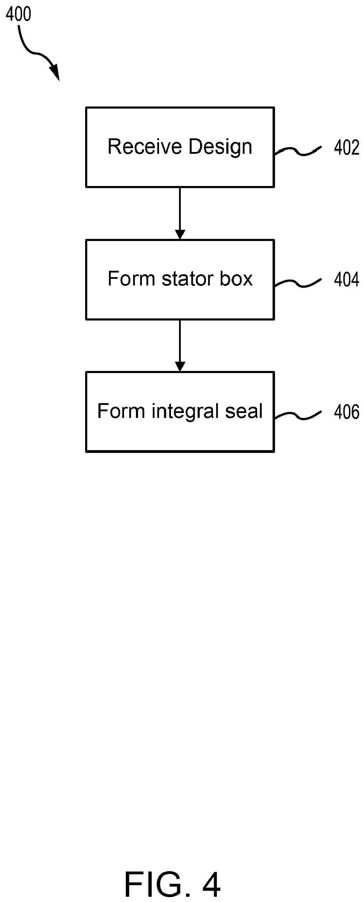

Referring now to FIG. 4, a method 400 of manufacturing a stator vane assembly having an integral seal is illustrated, in accordance with various embodiments. The stator vane assembly may be an example of stator vane assembly 300 or stator vane assembly 350 described above with respect to FIGS. 3A and 3B. In various embodiments, the integral seal may be an example of integral seal 306 or integral seal 356 described above with respect to FIGS. 3A and 3B.

At step 402, a design for stator box 302 is received. In various embodiments, the design may be a mold or a preform used to form stator box 302. In various embodiments, the design may a computer file including instructions for manufacturing stator box 302 using, for example, an additive manufacturing process. At step 404, stator box 302 is formed using the received mold. In various embodiments, stator box 302 is formed using molding process. In various embodiments, stator box 302 is formed using a hand layup, additive manufacturing, or an automated tape laying process, among others. At step 406, the integral seal (e.g., integral seal 306, integral seal 356) is formed as part of stator box 302.

In various embodiments, step 404 and step 406 are performed simultaneously, such as with a molding or a preform manufacturing process. That is, stator box 302 and the integral seal are formed as a single monolithic component during the same process. In various embodiments, stator box 302 and the integral seal are formed through multiple passes of a manufacturing process (e.g., hand layup, additive manufacturing, etc.). In various embodiments, each pass of the manufacturing process may deposit a single ply where each ply is about 7.5 mils to about 8 mils thick. In various embodiments, each ply may form a portion of stator box 302 and/or the integral seal. In various embodiments, while step 406 may include more passes than step 404, stator box 302 and the integral seal are manufactured as a single, monolithic component.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A stator vane assembly, comprising:
a stator box having a top side and a bottom side;
a vane coupled to the top side of the stator box; and
an integral seal coupled to the bottom side of the stator box, the integral seal extending away from the stator box and forming a tortuous path to prevent airflow below the stator box.

2. The stator vane assembly of claim 1, the integral seal further comprising:
a plurality of extended portions; and
a plurality of recessed portions interleaved with the plurality of extended portions.

3. The stator vane assembly of claim 2, wherein the stator vane assembly is configured to move forward and aft a first distance and wherein each of the plurality of recessed portions has a width that is greater than the first distance.

4. The stator vane assembly of any of claims 1, 2, or 3, wherein the stator box and the integral seal are a single, monolithic component, and/or
wherein the stator box and the integral seal are formed from the same material.

5. The stator vane assembly of any preceding claim, the integral seal further comprising:
a first portion that extends away from the stator box a first height; and
a second portion that extends away from the stator box a second height, the second height being less than the first height.

6. The stator vane assembly of claim 5, wherein the first portion includes a first edge and a second edge, the second edge being adjacent the second portion, wherein the first edge has a non-vertical slope, or
wherein the first portion includes a first edge and the second portion includes a second edge, wherein the first edge and the second are vertical.

7. The stator vane assembly of any preceding claim, wherein the integral seal is formed of a plurality of plies.

8. A gas turbine engine, comprising:
a rotor assembly and a plate seal; and
a vane assembly including a stator vane assembly, the stator vane assembly including:
a stator box having a top side and a bottom side;
a vane coupled to the top side of the stator box; and
an integral seal coupled to the bottom side of the stator box, the integral seal extending away from the stator box toward the rotor assembly, the integral seal and the plate seal combining to form a tortuous path to reduce airflow between the rotor assembly and the vane assembly.

9. The gas turbine engine of claim 8, the integral seal further comprising:
a plurality of extended portions; and
a plurality of recessed portions interleaved with the plurality of extended portions, a recessed portion of the plurality of recessed portions disposed over the plate seal.

10. The gas turbine engine of claim 9, wherein the vane assembly is configured to move forward and aft a first distance with respect to the rotor assembly, and wherein each of the plurality of recessed portions has a width that is greater than the first distance.

11. The gas turbine engine of any of claims 8 to 10, wherein the stator vane assembly is a single monolithic component, and/or
wherein the stator vane assembly is formed from a plurality of plies that are formed on top of each other.

12. The gas turbine engine of any of claims 9 to 11, wherein the integral seal includes a first edge and a second edge, the first edge and the second edge being vertical, or
wherein the integral seal includes a first edge and a second edge, the first edge and the second edge being non-vertical.

13. A method of manufacturing a stator vane assembly, comprising:
receiving a design for the stator vane assembly, the stator vane assembly including a vane, a stator box, and an integral seal;
forming the stator box of the stator vane assembly; and
forming the integral seal of the stator vane assembly, the integral seal being coupled to the stator box.

14. The method of manufacturing the stator vane assembly of claim 13, wherein the design includes one of a mold or a preform, or
wherein the design includes a computer file including instructions for forming the stator box and the integral seal as a single monolithic component using at least one of an additive manufacturing or an automated tape laying process.

15. The method of manufacturing the stator vane assembly of claim 13 or 14, wherein the forming the stator box and the forming the integral seal includes forming a series of plies that define the stator box and the integral seal.
